# EUROPEAN PATENT APPLICATION

(11) **EP 2 502 483 A1**
(43) Date of publication of application: **26.09.2012**
(21) Application number: 10831024.4
(22) Date of filing: 12.08.2010
(51) Int. Cl.: A01D 34/43, A01D 34/57, A01D 67/00

(54) **HUMAN-POWERED LAWN MOWING VEHICLE**

(30) Priority: 19.11.2009 CN 200920255249 U; 28.04.2010 CN 201020184350 U
(71) Applicant: Yangzhou Weibang Garden Machine Company Limited, Yangzhou, Jiangsu 225127 (CN)
(72) Inventor: JU, Sucheng, Jiangsu 225127 (CN); ZHENG, Xuzhong, Jiangsu 225127 (CN)
(74) Representative: Achler, Matthias
(86) International application number: PCT/CN2010/001222
(87) International publication number: WO 2011/060608

(57) **Abstract**

The present invention relates to a garden machine. More specifically, the present invention relates to a pedal-driven lawn mower. The pedal-driven lawn mower of the present invention comprises a carriage, a mechanism for driving the lawn mower and a cutting hob mechanism arranged on said carriage; said cutting hob mechanism is transmission connected to said mechanism for driving the lawn mower. The present invention combines cutting hob mechanism with the pedal-driven vehicle whereby an operator can sit on the lawn mower to control the direction and drive the lawn mower and the cutting hob mechanism when pedaling. The present invention functions both sports entertainment and grass cutting but uses no fuel or power thus is healthy and environment-friendly.

## Description

### FIELD OF THE INVENTION

The present invention relates to a garden machine. More specifically, the present invention relates to a pedal-driven lawn mower.

### BACKGROUND OF THE INVENTION

Currently, a small garden machine such as a portable bush cutter, a gasoline type mower or an electric type mower is commonly used to cut grass. When operating such garden machines, an operator stands on a lawn to control the cutting and movement of the garden machine the driving force of which comes from either combustion of gasoline or consumption of electric power.

### SUMMARY OF THE INVENTION

The purpose of the present invention is to provide a pedal-driven lawn mower that negates the necessity for consumption of gasoline or electric power. Additionally, the present invention also provides the lawn mower with new functions such as for sports and recreation.

The pedal-driven lawn mower of the present invention comprises a carriage, a mechanism for driving the lawn mower and a cutting hob mechanism arranged on said carriage; said cutting hob mechanism is transmission connected to said mechanism for driving the lawn mower.

In one embodiment of the present invention, a handle, front wheels, a seat, rear wheels, a pedal, a pedal centre shaft and a gear box connected to the pedal centre shaft is each arranged on said carriage, and said pedal centre shaft is connected to said rear wheels by a transmission chain.

The cutting hob mechanism is hinged to the front end of the carriage and can be readily seen and manipulated by an operator. The hinge joint enables lifting or laying down of said cutting hob mechanism as required. When the pedal-driven lawn mower is just for entertainment or being moved to another place, the cutting hob mechanism can be lifted and fixed to the carriage making the same above the ground so as to ease the efforts of the operator. When the pedal-driven lawn mower is used for cutting, said cutting hob mechanism can be laid down and fixed at a predetermined height that is appropriate for the cutting operation.

Said cutting hob mechanism comprises a shell; and a roller, a cutting hob, a transmission shaft arranged in order from the front end to the rear end of the shell; a transmission gear train is arranged between the cutting hob and the transmission shaft; a gear box connected to the pedal centre shaft is arranged on the carriage, a first chain wheel is fixed on the transmission shaft; said first chain wheel is transmission connected to an output chain wheel of said gear box via a driving chain thereby the driving force can be transmitted to the first chain wheel via the gear box and thus the cutting hob can be activated for cutting through the gear train. Additionally, a clutch can also be fixed to the transmission shaft, thereby facilitating run/stop of the cutting hob.

For the purpose to adjust the remaining height of the grass after cutting, said cutting hob mechanism can further include a cutting height adjuster.

In order to control the speed of the lawn mower, a brake hand lever can be fixed to the handle and said brake hand lever is connected to the rear wheels via a brake cable to control the rear wheels.

Two rear wheels are preferably used to improve the stability of the lawn mower. Said two rear wheels are connected to each side of the rear wheel shaft, which is attached to the carriage via bearings. A walking chain wheel is fixed to the rear wheel shaft wherein said walking chain wheel is connected to said pedal centre shaft via a driving chain. A brake mechanism is arranged on the two rear wheels and said brake mechanism is connected to the brake cable.

Said rear wheel shaft is directly fixed to one of the rear wheels and is attached to the other rear wheel by a bearing so as to facilitate that one rear wheel runs due to being driven by the driving chain and the other rear wheel follows when changing direction. In the present invention, when the lawn mower changes direction, the two rear wheels can run in different speeds or directions thus avoiding the sliding friction between the outer surface of the rear wheels and the lawn thereby effectively reducing hurts to the grass caused by the lawn mower.

The brake mechanism can be a brake drum or a brake disc to provide a reliable braking effect.

For the purpose of further improving the stability of the lawn mower, a front wheel support is connected to the front end of the carriage and on each side of the front wheel support, a front wheel is hinged to the support. In addition, a short link is extended from each hinge and the other end of each short link is connected to a link. A steering link is attached to said front wheel support and said link by hinges. When an operator turns the handle, the two front wheels can be driven to move to the same direction thereby the change of direction can be carried out.

Preferably, a motor can be arranged on the carrier. The output shaft of said motor can be used to provide extra power to drive the mechanism for driving the lawn mower via a chain wheel and a chain.

In another embodiment of the present invention, said pedal-driven mechanism for driving the lawn mower comprises a pedal, a pedal centre shaft, a gear box, said pedal centre shaft is connected to an input of the gear box; at the rear end of the carriage two bearing seats are fixed the inner holes of which is each inserted a rotation shaft and said two rotation shafts are both fixed to a swing support; a driving rear axle having a left half-axle, a right half-axle and a differential is fixed to said swing support; said two rear wheels are respectively connected to said left half-axle and the right half-axle; the input of the differential is flexibly connected to one end of a transmission shaft the other end of which is flexibly connected to the output of the gear box.

A motor, and a battery for supplying power to the motor can also be arranged on the carriage. Said motor is connected to the gear box via a clutch.

The present invention combines cutting hob mechanism with the pedal-driven vehicle whereby an operator can sit on the seat of the lawn mower to control the direction and drive the lawn mower and the cutting hob mechanism by pedaling. The present invention functions both sports entertainment and grass cutting but uses no fuel and power thus is healthy and environment-friendly.

### BRIEF DESCRIPTION OF THE DRAWINGS

Figure 1 is the schematic diagram of a pedal-driven lawn mower of the present invention;
Figure 2 is the top view of the pedal-driven lawn mower of Figure 1;
Figure 3 is the schematic diagram of another pedal-driven lawn mower of the present invention;
Figure 4 is the schematic diagram of a pedal-driven lawn mower having an additional driving device;
Figure 5 is the schematic diagram of a pedal-driven lawn mower having a rear wheel differential;
Figure 6 is the schematic diagram of a pedal-driven lawn mower the rear wheels of which are directly driven by a transmission shaft;
Figure 7 is a partial perspective diagram of the pedal-driven lawn mower of Figure 6 with some of the parts being removed;
Figure 8 is a partial top view of the pedal-driven lawn mower of Figure 6.

### DETAILED DESCRIPTION OF THE INVENTION

The present invention will be further described by referring to the accompanying drawings. It should be understood that the embodiments depicted in the drawings are for description of the invention only and shall not be construed as any limitation to the present invention. The scope of the invention would rather be defined by the appended claims.

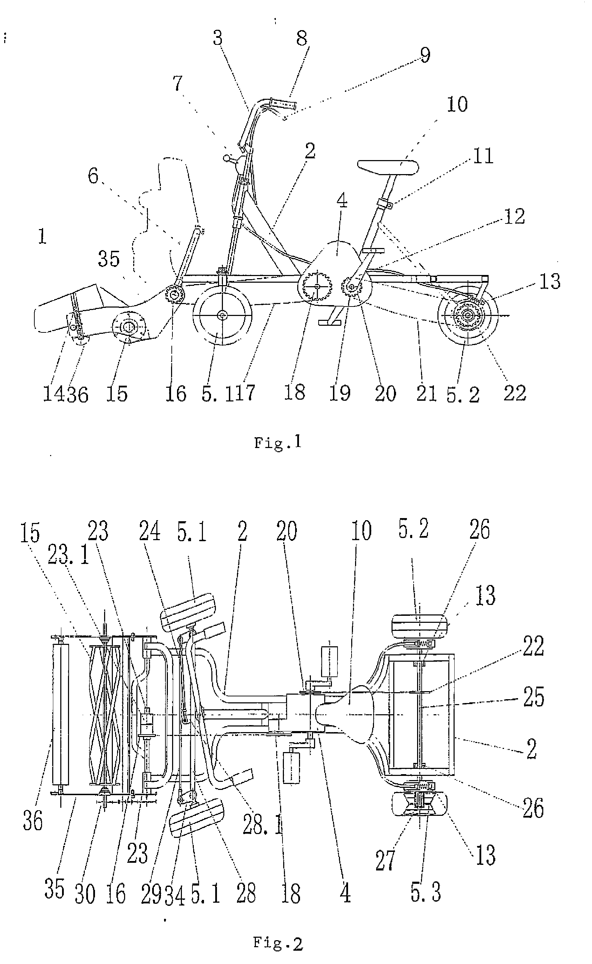

Figure 1 is the schematic diagram of a pedal-driven lawn mower of the present invention. As shown in Figure 1, the bicycle part of the pedal driven lawn mower comprises a carriage 2, a handle 8, a steering mechanism 3, front wheels 5.1, a seat 10, rear wheels 5.2 and 5.3, a pedal 12, a pedal centre shaft 19; said pedal centre shaft 19 is connected to said rear wheels 5.2, 5.3 by a transmission chain 21. A cutting hob mechanism 1 is hinged to the front end of the carriage 2 and a transmission connection is arranged between the cutting hob mechanism 1 and the pedal centre shaft 19. An operator can sit on the seat 10 and control the direction of the lawn mower. When pedaled, the lawn mower will move and at the same time, the cutting hob mechanism can be driven to cut grass.

As shown in Figures 1 and 2, the carriage 2 is of a steel structure. At the front end of the carriage 2, a front wheel support 28 and two front wheels 5.1 are arranged. The handle 8 is arranged in the vertical direction to control the swing of the two front wheels via a steering mechanism. The left and right front wheel each having a bearing are hinged to each end of the front wheel axle. From each of the hinge, a short link is extended and the other end of each short link is hinged to a link 29. A steering link 24 is hinged to the front wheel support 28 and the link 29. When the handle 8 is turned, the steering arm 28.1 pulls or pushes the hinge of the link 29 via a steering link 24 such that the two front wheels 5.1 swing to the left or right simultaneously around said hinges to carry out the change of direction of the lawn mower.

At the rear end of the carriage 2, a rear driving shaft 25 is arranged via a bearing 26. The rear wheel 5.2 is fixed to one end of the rear driving shaft 25 and the rear wheel 5.3 is connected to the other end of the driving shaft 25 via a bearing 27. A driving chain wheel 22 is fixed to the rear driving shaft 25. When the lawn mower moves and changes direction, a driving chain 21 drives the rear wheel 5.2 directly and the rear wheel 5.3 would follow via the bearing 27 which is installed on the rear driving shaft 25 to offset the difference of the rotating speeds of the two rear wheels. On each of the rear wheels 5.2, 5.3, a braking mechanism 13 is installed. When a braking is required, the braking mechanism is activated by the brake line one end of which is connected thereto. The other end of the brake line is connected to a brake hand lever 9 which is operated manually by the operator. By this way, the moving speed of the two rear wheels can be reduced, even stopped when required.

The cutting hob mechanism 1 comprises a shell 35; and a roller 36, a cutting hob 15, a driving shaft 23 which are arranged respectively via bearings from the front end to the rear end of the shell 35; a driving gear group 30 is arranged between the cutting hob 15 and the driving shaft 23 and a first chain wheel 16 is fixed to the driving shaft 23. A gear box 4 is installed on the carriage 2 and connected to the pedal central shaft 19. The first chain wheel 16 is transmission connected to an output chain wheel 18 of the gear box 4 via a driving chain 17.

A transmission clutch 23.1 can also be fixed to the driving shaft 23. The transmission clutch 23.1 can be used to carry out the running or stop of the cutting hob 15.

A cutting height adjuster 14 having a graduation can also be arranged on the outside surface of the cutting hob mechanism 1. When the cutting hob adjuster 14 is adjusted, the cutting hob mechanism 1 which is hinged to the front end of the carriage 2 would be drawn to rise or descend to a predetermined height to meet the cutting requirements of different lawns. A moving speed adjuster 7 may be arranged adjacent to the handle 8 of the steering mechanism. The moving speed adjuster has a handle which can be pulled to different positions to control the rotating direction of the cutting hob 15 as well as the moving speed of the lawn mower. For convenience, the moving speed adjuster 7 can also be arranged under the seat 10 adjacent to the gear box 4.

A seat 10 for an operator was fixed to the middle part of the carriage 2 by a vertical steel tube. The height of the seat 10 can be adjusted by releasing a locker 11 arranged under said seat 10 to satisfy different operators. The gear box 4 is arranged under the seat 10 and the central shaft 10 of the two pedals 12 is the input shaft of said gear box 4. When cutting is required, the operator can just step on the pedals 12 to drive the lawn mower. The operator can change the speed of the lawn mower by using different frequency of pedaling in combination with different positions of the gears.

The driving force is transmitted to the rear driving shaft to drive the lawn mower forward via the chain wheel 22, chain 21. Meanwhile, the driving force is transmitted to the front cutting hob 15 for cutting.

When the lawn mower is idle, the cutting hob mechanism 1 can be lifted from the grass and fixed to the front support 6.

The part of the gear box 4 for driving the rear axle has different positions which can be used to obtain different moving speeds to satisfy cutting requirements of different lawns. The neutral position of the gear box 4 is used for pushing ahead by people. The cutting hob mechanism 1 can also be lifted to reduce resistance when the lawn mower is required to move to another place.

The present invention can be used for grass cutting as well as sports and entertainment. The present invention does not consume fuel or power and is thus healthy and environment-friendly.

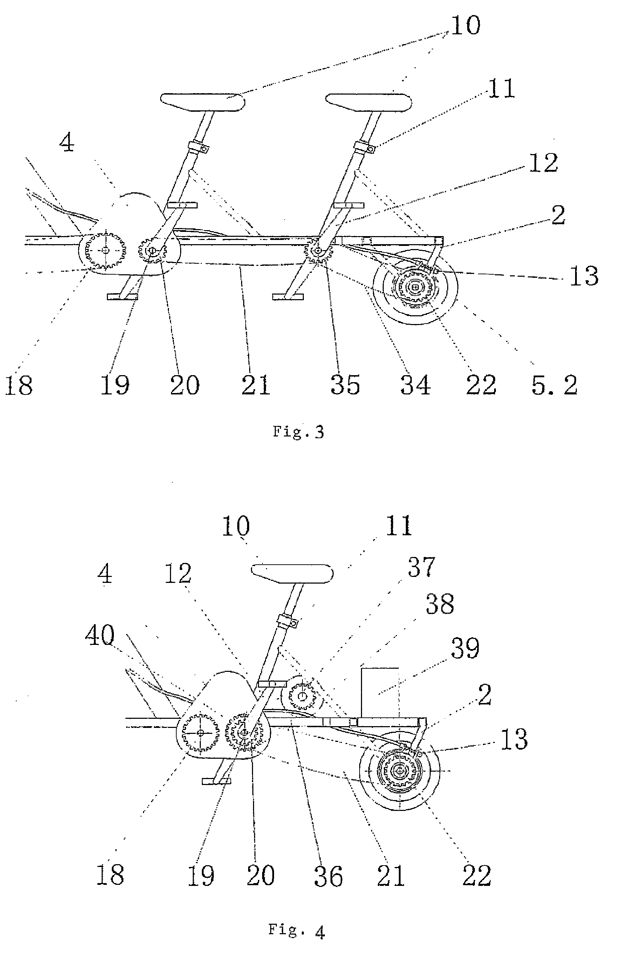

Despite of what has been described as above, from the aspect of humanization, the present invention can also designed as a power-assisted lawn mower. As shown in figure 4, a DC motor that is driven by a storage battery 39 can be further installed on the carriage 2. The DC motor can assist driving the lawn mower via chain wheels 37, 40, 20, 22 and chains 36, 21.

By turning on the switch for power-assisting, the lawn mower can be changed from the mode "sports" to "entertainment", regardless of that the lawn mower is cutting or moving from one place to the other.

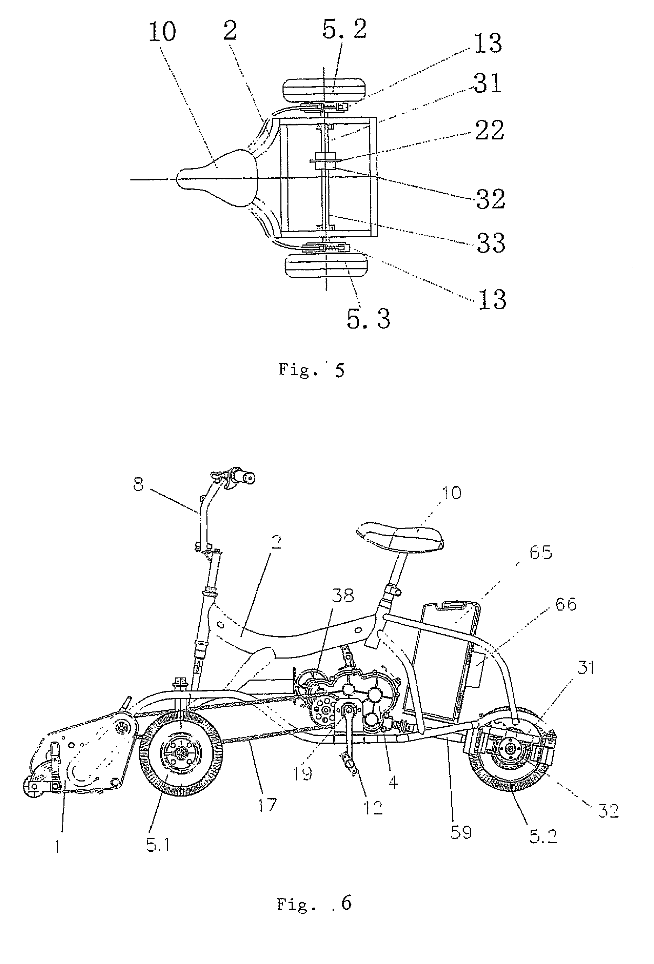

As shown in figure 5, a differential 32 can be further arranged on the middle part of the driving shaft 25. Said chain wheel 22 is connected to said differential 32. Two rear wheels 5.2, 5.3 each is connected respectively to the end of the left half axle or the end of the right half axle of the differential 32 thereby the two rear wheels can be run in different speeds in the change of direction.

As further shown in figure 3, two seats 10 can be arranged thereby dual driving forces can be obtained by pedaling of two operators.

The structure of another lawn mower the rear wheels of which are directly driven by a transmission shaft is shown in figures 6, 7, 8. As shown in figures 6, 7, 8, a handle 8, a handle switch 60, two front wheels 5.1, a seat 10, two rear wheels 5.2, pedals 12, a pedal central shaft 19, a motor 38 and a gear box are arranged respectively on a carriage 2 of the pedal-driven lawn mower. The motor 38 is connected to the said gear box 4 via a clutch which is arranged in said motor 38. The pedal central shaft 19 is connected to an input of said gear box 4.

Two bearing seats 56 which are arranged respectively at the front and the rear of the same axis are fixed to the rear end of the carriage 2. One end of each of two rotating shafts 58 is connected respectively to the inner hole of one of said two bearing seats 58, and the other end of each of the two shafts is respectively fixed to a swing support 61, wherein the rotating shaft 58 arranged adjacent to the gear box 4 is a hollow shaft in which a transmission shaft 59 is inserted.

A driving rear shaft comprising a left half-axle 33, a right half-axle 31 and a differential 32 is fixed to said swing support 61. Each of the two rear wheels 5.2 is respectively connected to said left half-axle 33 and said right half-axle 31. One end of the transmission shaft 59 is connected to the input of the differential 32 via a universal coupling and the other end of the transmission shaft 59 is connected to an output of the gear box 4.

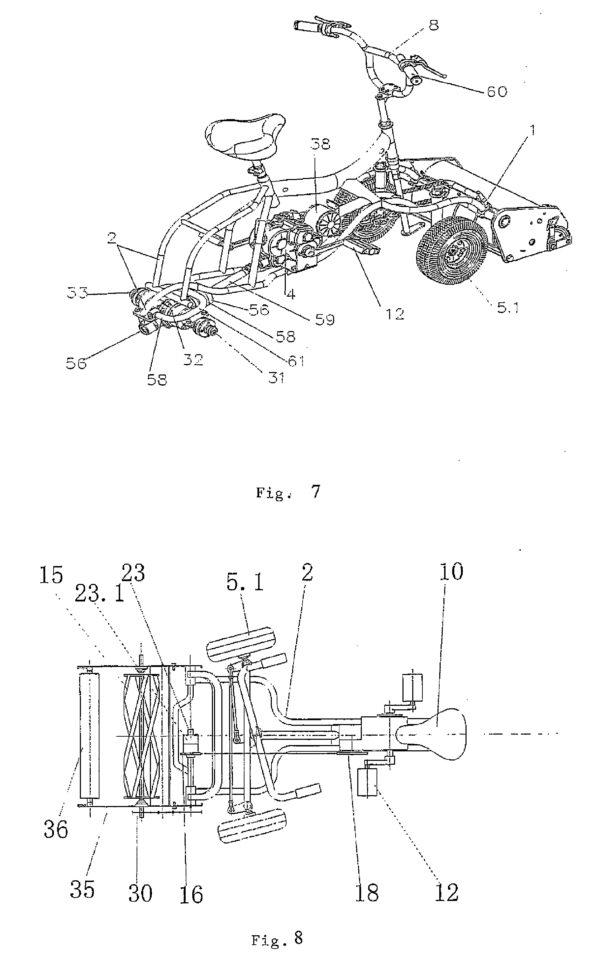

As shown in figure 8, a cutting hob mechanism 1 is arranged at the front end of the carriage 2. The cutting hob mechanism 1 comprises a shell 35; and a roller 36, a cutting hob 15, a cutting hob driving shaft 23 which are arranged respectively via bearings from the front end to the rear end of the shell 35; a driving gear group 30 is arranged between the cutting hob 15 and the cutting hob driving shaft 23; a chain wheel 16 is fixed to the cutting hob driving shaft 23. The chain wheel 16 is transmission connected to an output chain wheel 18 of the gear box 4 via a driving chain 17.

A transmission clutch 23.1 can also be fixed on the driving shaft 23. The transmission clutch 23.1 can be used to carry out the running or stop of the cutting hob 15.

As shown in figure 6, a storage battery is arranged on the rear end of the carriage 2. A cable is used to connect the storage battery 65 and the motor 38. A central control unit 66 is fixed to the support of the storage battery 65 and the central control unit 66 is connected to the handle switch 60 which is arranged on the handle 8 by another cable (see figure 7).

For the sake of braking, the braking mechanism depicted in figure 2 and figure 5 can also be used on the rear wheels of the lawn mower which is shown in figures 6, 7 and 8.

The handle 8 may also be replaced by other steering means, such as a steering wheel, which are known in the art. While said braking mechanism and said switch can also be replaced by a foot step type braking mechanism and a foot step type switch respectively.

Having described the preferred embodiments of the invention, it is understood that the invention defined by the appended claims is not to be limited by particular details set forth in the above description, as many apparent variations thereof are possible without departing from the spirit or scope thereof.

## Claims

1. A pedal-driven lawn mower comprises a carriage, a mechanism for driving the lawn mower and a cutting hob mechanism arranged on said carriage; said cutting hob mechanism is transmission connected to said mechanism for driving the lawn mower.

2. The pedal-driven lawn mower according to claim 1, wherein a handle, front wheels, a seat, rear wheels, pedals, a pedal centre shaft and a gear box connected to the centre shaft is each arranged on said carriage, and said pedal centre shaft is connected to said rear wheels by a transmission chain.

3. The pedal-driven lawn mower according to claim 2, wherein the cutting hob mechanism is hinged to the front end of the carriage.

4. The pedal-driven lawn mower according to claim 3, wherein said cutting hob mechanism comprises a shell; and a roller, a cutting hob, a transmission shaft arranged in order from the front end to the rear end of the shell; a transmission gear train is arranged between the cutting hob and the transmission shaft; a first chain wheel is fixed to the transmission shaft; said first chain wheel is transmission connected to an output chain wheel of said gear box via a driving chain.

5. The pedal-driven lawn mower according to claim 4, wherein a transmission clutch is fixed to the transmission shaft.

6. The pedal-driven lawn mower according to claim 5, wherein said cutting hob mechanism includes a cutting height adjuster.

7. The pedal-driven lawn mower according to claim 2, wherein a brake hand lever is arranged on the handle and said brake hand lever is connected to the rear wheel brake mechanism via a brake cable.

8. The pedal-driven lawn mower according to claim 2, wherein a moving speed adjuster is arranged adjacent to the handle or the gear box, said moving speed adjuster is connected to the shift lever of the gear box via a connecting piece.

9. The pedal-driven lawn mower according to claim 7, wherein two rear wheels are used, said two rear wheels are connected to each side of the rear wheel shaft which is attached to the carriage via bearings, and wherein a moving chain wheel is fixed to the rear wheel shaft, said moving chain wheel is connected to said pedal centre shaft via a driving chain; a brake mechanism is arranged on the two rear wheels and said brake mechanism is connected to the brake cable.

10. The pedal-driven lawn mower according to claim 9, wherein said brake mechanism is a brake drum or a brake disc.

11. The pedal-driven lawn mower according to claim 2, wherein a front wheel support is connected to the front end of the carriage, two front wheels are hinged respectively to each side of the front wheel support, a short link is extended from each of the hinge and the other end of each short link is hinged to a link, and wherein a steering link is hinged between the front wheel support and the link.

12. The pedal-driven lawn mower according to claim 1, wherein a motor and a battery for supplying power to the motor are arranged on the carriage, the output shaft of the motor assists driving the mechanism for driving the lawn mower via a chain wheel and a chain.

13. The pedal-driven lawn mower according to claim 1, wherein said mechanism for driving the lawn mower comprises pedals, a pedal centre shaft, a gear box, said pedal centre shaft is connected to an input of the gear box; at the rear end of the carriage two bearing seats are fixed the inner holes of which are each inserted a rotation shaft and said two rotation shafts are both fixed to a swing support; a driving rear shaft having a left half-axle, a right half-axle and a differential is fixed to said swing support; said left half-axle and right half-axle are respectively connected to one output of the differential, said two rear wheels are each connected to said left half-axle and the right half-axle; the input of the differential is flexibly connected to one end of a transmission shaft and the other end of the transmission shaft is flexibly connected to the output of the gear box.

14. The pedal-driven lawn mower according to claim 13, wherein the cutting hob mechanism is arranged at the front end of the carriage, said cutting hob mechanism comprises a shell; and a roller, a cutting hob, a cutting hob transmission shaft arranged in order from the front end to the rear end of the shell; a transmission gear train is arranged between the cutting hob and the transmission shaft; a chain wheel is fixed on the transmission shaft; said chain wheel is transmission connected to an output chain wheel of said gear box via a driving chain.

15. The pedal-driven lawn mower according to claim 14, wherein a transmission clutch is fixed to the transmission shaft.

16. The pedal-driven lawn mower according to claim 14, wherein a motor and a battery for supplying power to the motor are arranged on the carriage, and said motor is connected to the gear box by a clutch.

17. The pedal-driven lawn mower according to claim 16, wherein a central control unit is fixed to the support of the storage battery and the central control unit is connected to a switch which is arranged on the handle by a cable.

18. The pedal-driven lawn mower according to claim 13, wherein a brake hand lever is arranged on the handle and said brake hand lever is connected to the rear wheel brake mechanism via a brake cable.
